# EUROPEAN PATENT APPLICATION

(11) **EP 3 352 075 A1**
(43) Date of publication of application: **25.07.2018**
(21) Application number: 18150758.3
(22) Date of filing: 09.01.2018
(51) Int. Cl.: G06F 9/4401, G06F 9/455

(54) **VIRTUAL ENVIRONMENT EXECUTION APPARATUS AND STORAGE MEDIUM**

(30) Priority: 18.01.2017 JP 2017006655
(71) Applicant: KABUSHIKI KAISHA TOSHIBA, Minato-ku Tokyo 105-8001 (JP); Toshiba TEC Kabushiki Kaisha, Tokyo 141-8562 (JP)
(72) Inventor: INAGAKI, Yasuhiro, Shinagawa-ku,, Tokyo 141-8562 (JP)
(74) Representative: Takeuchi, Maya

(57) **Abstract**

According to an embodiment, a virtual environment execution apparatus executes a virtual machine. A storage unit stores data in an non-volatile manner. When an instruction to put the virtual machine into a power-saving mode is received, a storage control unit causes data stored in a virtualized memory of the virtual machine to be stored in the storage unit. When an instruction to resume the virtual machine is received, a memory control unit retrieves the data that was previously caused to be stored in the storage unit by the storage control unit and stores the retrieved data in the virtualized memory.

## Description

### FIELD

The present invention relates generally to a field of virtual machine technology, and more particularly to a virtual environment execution apparatus and a storage medium.

### BACKGROUND

Execution of an operating system (OS) and application software can be commonly performed on a virtual machine. However, a conventional virtual machine may be unable to reproduce a power-saving mode such as sleep mode.

### SUMMARY OF INVENTION

To solve the above-cited problems, there is provided a virtual environment execution apparatus that executes a virtual machine, the virtual environment execution apparatus comprising:
a memory storage configured to store data in a non-volatile manner; and
a processor configured to function as:
   a storage controller that, when an instruction to put the virtual machine into a power-saving mode is received, is configured to cause data stored in a virtualized memory of the virtual machine to be stored in the memory storage, and a memory controller that, when an instruction to resume the virtual machine is received, is configured to retrieve the data that was previously caused to be stored in the memory storage by the storage controller and store the retrieved data in the virtualized memory.

In an exemplary embodiment the processor is further configured to function as:
a power source controller that, after the instruction to put the virtual machine in the power-saving mode is received and after the storage controller causes the data to be stored in the memory storage, is configured to stop a supply of electric power to a virtualized processor of the virtual machine.

Preferably, when the instruction to resume the virtual machine is received, the processor is configured to execute the virtual machine in a standard mode.

Preferably yet the processor is further configured to function as:
a recognition unit that, when an instruction for starting the execution of the virtual machine is received, is configured to determine whether the storage controller caused data to be stored in the memory storage, wherein, if the storage controller did not cause the data to be stored in the memory storage, the virtual machine is activated without retrieving data from the memory storage to store in the virtualized memory.

Preferably yet the processor is further configured to determine whether an instruction for activating the virtual machine is received, and the virtual machine is activated in response to the instruction for activating the virtual machine being received.

Preferably the embodiment is further characterized in that: when a virtualized processor of the virtual machine determines that an instruction to shut down the virtual machine is received, the power source controller is configured to stop a supply of electric power to the virtualized processor without the storage controller causing data from the virtualized memory to be stored in the storage controller.

Preferably the embodiment is further characterized in that: when after the memory controller stores the retrieved data in the virtualized memory, and an instruction is received to cancel the power-saving mode, the processor is configured to cause the power saving mode to be cancelled and to stop a supply of electric power to the virtualized processor without the storage controller causing data from the virtualized memory to be stored in the storage controller.

In another exemplary embodiment, there is also provided a method of managing memory for a virtual machine executed on a virtual environment execution apparatus, the method comprising the steps of:
activating the virtual machine;
receiving a first instruction to put the virtual machine into a power-saving mode;
in response to the first instruction, causing data stored in a virtualized memory of the virtual machine to be stored in a non-volatile storage unit of the virtual environment execution apparatus;
receiving a second instruction to resume the virtual machine;
in response to the second instruction, retrieving the data from the non-volatile storage unit; and
storing the retrieved data in the virtualized memory.

Preferably the method further comprises the step of: in response to the first instruction and after the data is stored in the non-volatile storage unit, stopping a supply of electric power to a virtualized processor of the virtual machine.

Preferably yet the method further comprises the step of:
in response to the second instruction and after the retrieved data is stored in the virtualized memory, executing the virtual machine in a standard mode.

Preferably the method according to the present invention is further characterized in that: after storing the retrieved data in the virtualized memory, and receiving an instruction to cancel the power-saving mode, causing the power saving mode to be cancelled and stopping a supply of electric power to a virtualized processor without causing data from the virtualized memory to be stored in the non-volatile storage unit.

In another exemplary embodiment, there is provided a non-transitory computer-readable storage medium storing a program that causes a computer to execute a method of managing memory for a virtual machine, the method comprising the steps of:
activating the virtual machine on the computer;
receiving a first instruction to put the virtual machine into a power-saving mode;
in response to the first instruction, causing data stored in a virtualized memory of the virtual machine to be stored in a non-volatile storage unit of the computer;
receiving a second instruction to resume the virtual machine;
in response to the second instruction, retrieving the data from the non-volatile storage unit; and
storing the retrieved data in the virtualized memory.

Preferably in said embodiment the method further comprises the step of:
in response to the first instruction and after the data is stored in the non-volatile storage unit, stopping a supply of electric power to a virtualized processor of the virtual machine.

Preferably yet in said embodiment the method further comprises the step of:
in response to the second instruction and after the retrieved data is stored in the virtualized memory, executing the virtual machine in a standard mode.

Preferably yet in said embodiment the method further comprises the steps of:
after storing the retrieved data in the virtualized memory, and receiving an instruction to cancel the power-saving mode, causing the power saving mode to be cancelled and stopping a supply of electric power to a virtualized processor without causing data from the virtualized memory to be stored in the non-volatile storage unit.

### DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a block diagram illustrating an example hardware configuration of a virtual environment execution apparatus according to an embodiment.
Fig. 2 is a block diagram illustrating an example functional configuration of the virtual environment execution apparatus.
Fig. 3 is a flowchart of an example sequence of operations of the virtual environment execution apparatus.

### DETAILED DESCRIPTION

An exemplary embodiment provides a virtual environment execution apparatus and a storage medium which can reproduce a power-saving mode on a virtual machine.

According to an embodiment, a virtual environment execution apparatus executes a virtual machine. A storage unit stores data in an non-volatile manner. When an instruction to place the virtual machine into a power-saving mode is received, a storage control unit causes data stored in a virtualized memory of the virtual machine to be stored in the storage unit. When an instruction to resume the virtual machine is received, a memory control unit retrieves the data that was previously caused to be stored in the storage unit by the storage control unit and stores the retrieved data in the virtualized memory.

Hereinafter, a virtual environment execution apparatus according to an embodiment will be described with reference to the drawings.

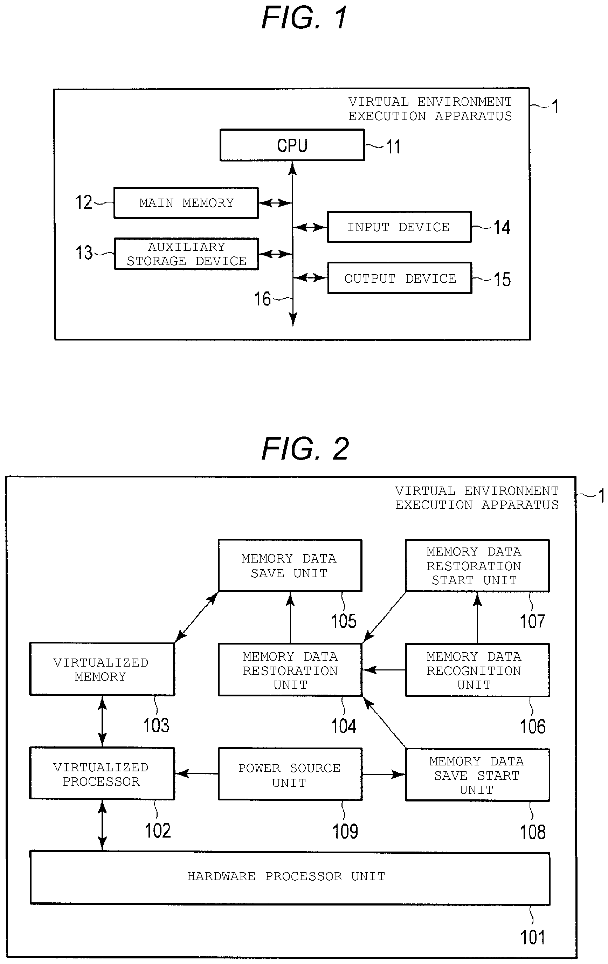

Fig. 1 is a block diagram illustrating an example hardware configuration of the virtual environment execution apparatus 1 according to the embodiment.

The virtual environment execution apparatus 1 executes a virtual machine. The virtual environment execution apparatus 1 may include a central processing unit (CPU) 11, a main memory 12, an auxiliary storage device 13, an input device 14, an output device 15, and a bus 16.

The CPU 11 performs processing and control required for operations of the virtual environment execution apparatus 1. The CPU 11 controls various units so as to implement various functions of the virtual environment execution apparatus 1 based on a program, such as an operating system or application software, stored in the main memory 12 or the auxiliary storage device 13.

The main memory 12 corresponds to a main storage region of the computer. In some cases, the main memory 12 can store a program, such as an operating system or application software. Furthermore, the main memory 12 is used as a work space, which stores data which the CPU 11 temporarily uses to perform various processing operations.

The auxiliary storage device 13 corresponds to an auxiliary storage region of the computer. The auxiliary storage device 13 stores data in a non-volatile manner, and is, for example, an electrically erasable programmable read-only memory (EEPROM), a hard disk drive (HDD), or a solid state drive (SSD). In some cases, the auxiliary storage device 13 can store the program, such as an operating system or application software. Moreover, the auxiliary storage device 13 saves, for example, data which the CPU 11 uses to perform various processing operations or data generated by processing performed by the CPU 11. Furthermore, the virtual environment execution apparatus 1 may include an interface, such as a card slot, for connecting to a storage device such as a memory card, which may be used instead of or in addition to the auxiliary storage device 13. The memory card corresponds to an auxiliary storage region of the computer. The auxiliary storage device 13 is an example of a storage unit that stores data.

The program stored in the main memory 12 or the auxiliary storage device 13 may include a virtual environment execution program, described below. As an example, the virtual environment execution apparatus 1 may be provided to a user with the virtual environment execution program stored in the main memory 12 or the auxiliary storage device 13. However, the virtual environment execution apparatus 1 may be provided to the user with the virtual environment execution program not stored in the main memory 12 or the auxiliary storage device 13. Furthermore, the virtual environment execution apparatus 1 may be provided to the user with another virtual environment execution program stored in the main memory 12 or the auxiliary storage device 13. Then, the virtual environment execution program described below can be transferred to, for example, the user, and then written into the auxiliary storage device 13 by the operation of, for example, the user. The transfer of the virtual environment execution program in this instance can be implemented by recording on a removable recording medium, such as a magnetic disc, a magneto-optical disc, an optical disc, or a semiconductor memory, or by downloading performed via a network.

The input device 14 receives an operation performed by the operator of the virtual environment execution apparatus 1. The input device 14 is, for example, a keyboard, a keypad, a touchpad, or a mouse. The output device 15 displays a screen used to notify the operator of the virtual environment execution apparatus 1 of various pieces of information. The output device 15 may be, for example, a display, such as a liquid crystal display or an organic electroluminescence (EL) display. Moreover, a display panel mounted on a touchpad in an overlap manner can be used as the output device 15. In other words, the display panel included in a touch panel can be used as the output device 15, and the touchpad included in the touch panel can be used as the input device 14.

The bus 16 may include, for example, an address bus and a data bus, and transfers signals between various units of the virtual environment execution apparatus 1.

Fig. 2 is a block diagram illustrating an example functional configuration of the virtual environment execution apparatus 1. The virtual environment execution apparatus 1 may include a hardware processor unit 101, a virtualized processor 102, a virtualized memory 103, a memory data restoration unit 104, a memory data save unit 105, a memory data recognition unit 106, a memory data restoration start unit 107, a memory data save start unit 108, and a power source unit 109. Each unit may be configured as a controller or processor or a part of one controller or processor.

The hardware processor unit 101 performs processing to cause the virtualized processor 102 and the virtualized memory 103 to perform the respective functions. As an example, when executing a virtual environment execution program, the CPU 11 functions as the hardware processor unit 101.

The virtualized processor 102 is a processor of a virtual machine, which performs processing and control required for operations of the virtual machine. The virtualized processor 102 controls various units to implement various functions of the virtual machine based on a program, such as an operating system or application software. As an example, when executing the virtual environment execution program, the CPU 11 functions as the virtualized processor 102.

The virtualized memory 103 corresponds to a main storage region of the virtual machine. The virtualized memory 103 is used as a work area, which stores data which the virtualized processor 102 temporarily uses to perform various processing operations. As an example, when executing the virtual environment execution program, the CPU 11 functions as the virtualized memory 103 in cooperation with the main memory 12. A storage region required for operations of the virtualized memory 103 is allotted in the main memory 12, for example. Furthermore, data stored in the virtualized memory 103 is referred to as memory data.

The memory data restoration unit 104 brings the virtualized memory 103 into a state in which memory data previously saved in the memory data save unit 105 is stored. As an example, when executing the virtual environment execution program, the CPU 11 functions as the memory data restoration unit 104.

The memory data save unit 105 saves memory data. As an example, when executing the virtual environment execution program, the CPU 11 functions as the memory data save unit 105 in cooperation with the auxiliary storage device 13. Memory data which the memory data save unit 105 saves is saved in the auxiliary storage device 13, for example.

The memory data recognition unit 106 determines whether memory data is saved in the memory data save unit 105. When executing the virtual environment execution program, the CPU 11 functions as the memory data recognition unit 106.

The memory data restoration start unit 107 instructs the memory data restoration unit 104 to transmit memory data saved in the memory data save unit 105 to the virtualized memory 103. As an example, when executing the virtual environment execution program, the CPU 11 functions as the memory data restoration start unit 107.

The memory data save start unit 108 instructs the memory data save unit 105 to save memory data stored in the virtualized memory 103. As an example, when executing the virtual environment execution program, the CPU 11 functions as the memory data save start unit 108.

The power source unit 109 controls electric power to the virtualized processor 102. As an example, when executing the virtual environment execution program, the CPU 11 functions as the power source unit 109.

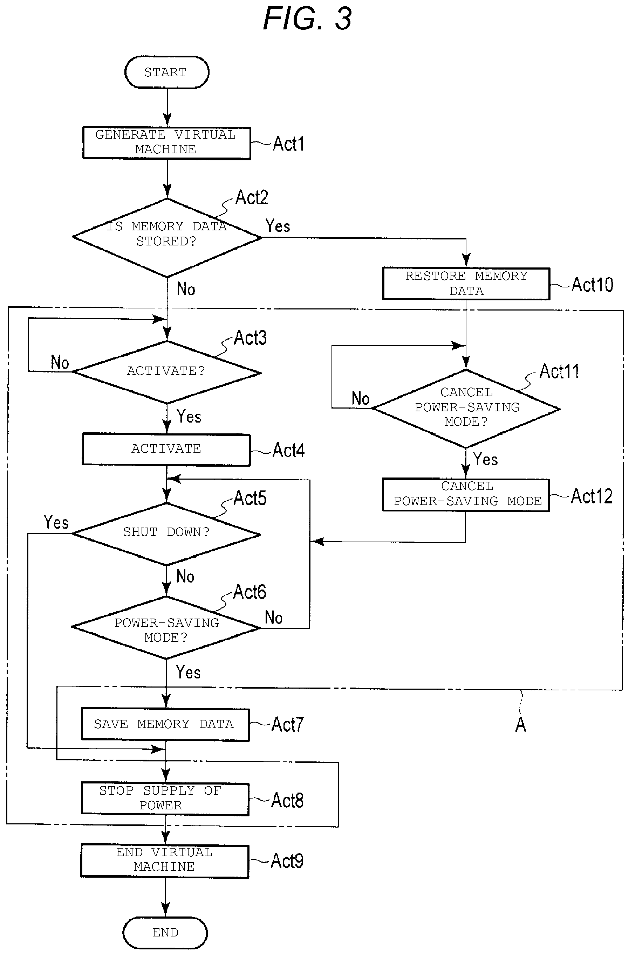

Hereinafter, an example sequence of operations of the virtual environment execution apparatus 1 according to the embodiment is described with reference to Fig. 3. Furthermore, the content of processing described in the following operation is merely an example, and various processing operations capable of obtaining a similar effect can be employed as appropriate. Fig. 3 is a flowchart of an example sequence of operations performed by the CPU 11 of the virtual environment execution apparatus 1. The CPU 11 performs the operations based on the virtual environment execution program stored in the main memory 12 or the auxiliary storage device 13. As an example, the CPU 11 starts the sequence of operations in Fig. 3 according to execution of the virtual environment execution program.

To start the virtual machine, the operator of the virtual environment execution apparatus 1 operates the virtual environment execution apparatus 1, thus causing the virtual environment execution apparatus 1 to execute the virtual environment execution program.

In Act1 illustrated in Fig. 3, the CPU 11 of the virtual environment execution apparatus 1 generates a virtual machine. In other words, for example, the CPU 11 allocates resources for a virtual machine including the virtualized processor 102 and the virtualized memory 103. After Act1, the CPU 11 proceeds to Act2.

In Act2, the CPU 11 checks whether memory data is saved in the auxiliary storage device 13. Processing in Act2 is performed by, for example, the memory data recognition unit 106. If no memory data is saved (NO in Act2), the CPU 11 proceeds to Act3.

In Act3, the CPU 11 waits for an an instruction to activate the virtual machine. If an instruction to activate the virtual machine is received (YES in Act3), the CPU 11 proceeds to Act4. Furthermore, Act3 is included in region A as illustrated in Fig. 3. Processing included in the region A is processing that is performed by the virtual machine. This processing is emulated by the virtual environment execution apparatus 1 while executing the virtual environment execution program and the virtual machine. Furthermore, processing included in the range A corresponds to Act3 to Act6, Act8, Act11, and Act12.

In Act4, the CPU 11 activates the virtual machine. The activation of the virtual machine can be performed by using a known method, and the detailed description thereof is, therefore, omitted. Processing in Act4 is performed by, for example, the virtualized processor 102. After Act4, the CPU 11 proceeds to Act5.

In Act5, the CPU 11 determines whether an instruction to shut down the virtual machine is received. Processing in Act5 is performed by, for example, the virtualized processor 102. If the operation for giving an instruction to shut down the virtual machine is not performed (NO in Act5), the CPU 11 proceeds to Act6.

In Act6, the CPU 11 determines whether an instruction to transition the virtual machine to power-saving mode is received. Processing in Act6 is performed by, for example, the virtualized processor 102. The term "power-saving mode" as used herein refers to reducing consumption of electric power by, for example, stopping supply of power to hardware other than the main memory while maintaining supply of power to the main memory. For example, the above power-saving mode is also called "suspend" in, for example, WINDOWS® 95 and LINUX®, "standby" in, for example, WINDOWS 98 to WINDOWS XP and MAC® OS, and "sleep" in, for example, WINDOWS VISTA and its subsequent operating systems and WINDOWS SERVER 2008 and its subsequent operating systems. If the operation for giving an instruction to transition the virtual machine to power-saving mode is not performed (NO in Act6), the CPU 11 returns to Act5. Thus, the CPU 11 repeats Act5 and Act6 until an instruction to shut down the virtual machine is received or an instruction to transition the virtual machine to power-saving mode is received.

To transition the virtual machine to power-saving mode, the operator of the virtual environment execution apparatus 1 inputs an instruction to transition the virtual machine to power-saving mode on the virtual environment execution apparatus 1.

If the instruction to transition the virtual machine to power-saving mode is received during the wait state in Act5 and Act6 (YES in Act6), the CPU 11 proceeds to Act7.

In Act7, the CPU 11 causes data stored in the virtualized memory 103, i.e., memory data, to be saved by the memory data save unit 105 on the auxiliary storage device 13. Accordingly, when performing processing in Act7, the CPU 11 functions as a storage control unit that causes data stored in a memory located on the virtual machine to be stored in a non-volatile storage device. Furthermore, processing in Act7 is performed by, for example, the memory data save unit 105 and the memory data save start unit 108. Accordingly, the memory data save unit 105 and the memory data save start unit 108 function as a storage control unit. After processing in Act7, the CPU 11 proceeds to Act8.

On the other hand, to shut down the virtual machine, the operator of the virtual environment execution apparatus 1 inputs an instruction to shut down the virtual machine on the virtual environment execution apparatus 1.

If the instruction to shut down the virtual machine is received at the time of a wait state in Act5 and Act6 (YES in Act5), the CPU 11 also proceeds to Act8.

In Act8, the CPU 11 stops supply of power to the virtualized processor 102. Accordingly, when performing processing in Act8, the CPU 11 functions as a stop unit that stops supply of power to a virtualized processor on a virtual machine. Furthermore, processing in Act8 is performed by, for example, the power source unit 109. After processing in Act8, the CPU 11 proceeds to Act9. Accordingly, the power source unit 109 functions as a stop unit.

In Act9, the CPU 11 ends the operation of the virtual machine. After processing in Act9, the CPU 11 ends the control processing illustrated in Fig. 3.

As described above, when an instruction to transition to power-saving mode is received, memory data is saved in the auxiliary storage device 13. If the control processing illustrated in Fig. 3 is started in this state (YES in Act2), the CPU 11 proceeds to Act10.

In Act10, the CPU 11 restores memory data to the virtualized memory 103. More specifically, the CPU 11 reads the memory data stored by the memory data save unit in the auxiliary storage device 13. Then, the CPU 11 stores the memory data in the virtualized memory 103. In other words, the CPU 11 writes the memory data into the virtualized memory 103 and thus brings the virtualized memory 103 into a state in which the memory data is stored to be available for the virtual machine. Then, the CPU 11 deletes the memory data stored by the memory data save unit 105 in the auxiliary storage device 13. This brings the virtual machine into a state of being operated in power-saving mode. Processing in Act10 is performed in the case of resuming the virtual machine in the power-saving mode. Accordingly, when performing processing in Act10, the CPU 11 functions as a memory control unit that causes a memory unit of the virtual machine to store data retrieved from the storage unit in the case of resuming the virtual machine. Furthermore, processing in Act10 is performed by, for example, the memory data restoration unit 104 and the memory data restoration start unit 107. Accordingly, the memory data restoration unit 104 and the memory data restoration start unit 107 operate as a memory control unit. After processing in Act10, the CPU 11 proceeds to Act11.

To cancel power-saving mode in the virtual machine, the operator of the virtual environment execution apparatus 1 inputs an instruction to cancel power-saving mode in the virtual machine on the virtual environment execution apparatus 1.

In Act11, the CPU 11 waits for an instruction to cancel power-saving mode in the virtual machine to be performed. Processing in Act11 is performed by, for example, the virtualized processor 102. If the instruction to cancel power-saving mode in the virtual machine is received(YES in Act11), the CPU 11 proceeds to Act12.

In Act12, the CPU 11 cancels power-saving mode. More specifically, the CPU 11 emulates, on the virtual machine, an operation similar to the cancellation of power-saving mode performed in a physical machine other than the virtual machine. Processing in Act12 is performed by, for example, the virtualized processor 102. After processing in Act12, the CPU 11 proceeds to Act5.

The virtual environment execution apparatus 1 according to the embodiment causes the auxiliary storage device 13 to save memory data before ending the virtual machine. Then, when resuming the virtual machine, the virtual environment execution apparatus 1 brings the virtualized memory 103 into a state in which memory data previously saved in the memory data save unit 105 is stored, thus restoring memory data for the virtualized memory 103. The memory data for the virtualized memory 103 being restored brings the virtual machine into a state of being operated in power-saving mode. In the above-described manner, the virtual environment execution apparatus 1 is able to reproduce the power-saving mode on a virtual machine . Moreover, with this, using the virtual environment execution apparatus 1 enables a virtual machine to verify, for example, availability of the power-saving mode.

Furthermore, after saving memory data in the auxiliary storage device 13, the virtual environment execution apparatus 1 according to the embodiment emulates an operation for stopping supply of power to the virtualized processor 102. The virtual environment execution apparatus 1 performing such emulation enables enhancing the reproducibility of an operation performed at the time of transition to power-saving mode.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. A virtual environment execution apparatus that executes a virtual machine, the virtual environment execution apparatus comprising:
a memory storage configured to store data in a non-volatile manner; and
a processor configured to function as:
a storage controller that, when an instruction to put the virtual machine into a power-saving mode is received, is configured to cause data stored in a virtualized memory of the virtual machine to be stored in the memory storage, and
a memory controller that, when an instruction to resume the virtual machine is received, is configured to retrieve the data that was previously caused to be stored in the memory storage by the storage controller and store the retrieved data in the virtualized memory.

2. The apparatus according to claim 1, wherein the processor is further configured to function as:
a power source controller that, after the instruction to put the virtual machine in the power-saving mode is received and after the storage controller causes the data to be stored in the memory storage, is configured to stop a supply of electric power to a virtualized processor of the virtual machine.

3. The apparatus according to claim 1 or 2, wherein:
when the instruction to resume the virtual machine is received, the processor is configured to execute the virtual machine in a standard mode.

4. The apparatus according to any one of claims 1-3, wherein the processor is further configured to function as :
a recognition unit that, when an instruction for starting the execution of the virtual machine is received, is configured to determine whether the storage controller caused data to be stored in the memory storage, wherein, if the storage controller did not cause the data to be stored in the memory storage, the virtual machine is activated without retrieving data from the memory storage to store in the virtualized memory.

5. The apparatus according to any one of claims 1-4, wherein:
the processor is configured to determine whether an instruction for activating the virtual machine is received, and the virtual machine is activated in response to the instruction for activating the virtual machine being received.

6. The apparatus according to any one of claims 1-5, wherein:
when a virtualized processor of the virtual machine determines that an instruction to shut down the virtual machine is received, the power source controller is configured to stop a supply of electric power to the virtualized processor without the storage controller causing data from the virtualized memory to be stored in the storage controller.

7. The apparatus according to any one of claims 1-6, wherein:
when, after the memory controller stores the retrieved data in the virtualized memory, and an instruction is received to cancel the power-saving mode, the processor is configured to cause the power saving mode to be cancelled and to stop a supply of electric power to the virtualized processor without the storage controller causing data from the virtualized memory to be stored in the storage controller.

8. A method of managing memory for a virtual machine executed on a virtual environment execution apparatus, the method comprising the steps of:
activating the virtual machine;
receiving a first instruction to put the virtual machine into a power-saving mode;
in response to the first instruction, causing data stored in a virtualized memory of the virtual machine to be stored in a non-volatile storage unit of the virtual environment execution apparatus;
receiving a second instruction to resume the virtual machine;
in response to the second instruction, retrieving the data from the non-volatile storage unit; and
storing the retrieved data in the virtualized memory.

9. The method according to claim 8, further comprising the step of:
in response to the first instruction and after the data is stored in the non-volatile storage unit, stopping a supply of electric power to a virtualized processor of the virtual machine.

10. The method according to claim 8 or 9, further comprising the step of:
in response to the second instruction and after the retrieved data is stored in the virtualized memory, executing the virtual machine in a standard mode.

11. The method according to any one of claims 8-10, wherein:
after storing the retrieved data in the virtualized memory, and receiving an instruction to cancel the power-saving mode, causing the power saving mode to be cancelled and stopping a supply of electric power to a virtualized processor without causing data from the virtualized memory to be stored in the non-volatile storage unit.

12. A non-transitory computer-readable storage medium storing a program that causes a computer to execute the method according to any one of claims 8-11.
